# EUROPEAN PATENT APPLICATION

(11) **EP 4 368 598 A1**
(43) Date of publication of application: **15.05.2024**
(21) Application number: 22852710.7
(22) Date of filing: 24.06.2022
(51) Int. Cl.: C04B 35/66, F27D 1/00, F27D 1/16

(54) **DRY SPRAYING MATERIAL FOR FIRING FURNACE**

(30) Priority: 06.08.2021 JP 2021130218; 11.01.2022 JP 2022002583
(71) Applicant: Krosakiharima Corporation, Kitakyushu-shi, Fukuoka 806-8586 (JP)
(72) Inventor: TOKUTOMI, Atsushi, Kitakyushu-shi, Fukuoka 806-8586 (JP); KOGA, Masanori, Kitakyushu-shi, Fukuoka 806-8586 (JP); KAWABE, Yusuke, Kitakyushu-shi, Fukuoka 806-8586 (JP)
(74) Representative: Vossius & Partner Patentanwälte Rechtsanwälte mbB
(86) International application number: PCT/JP2022/025240
(87) International publication number: WO 2023/013284

(57) **Abstract**

The present invention provides a dry spraying material for a firing furnace, which is free from a need for a drying process after spraying, and capable of withstanding physical shock from furnace contents. The dry spraying material according to the present invention is designed for a firing furnace having a furnace wall temperature of 1400°C or less, wherein a SiO₂ component derived from raw materials having a particle size of less than 75 µm and an Al₂O₃ component derived from raw materials having a particle size of less than 75 µm are contained in the dry spraying material, respectively, in the dry spraying material in an amount of 1% by mass to 10% by mass and in an amount of 5% by mass to 40% by mass. Further, a basic compound fine powder of one or more types selected from the group consisting of magnesium oxide, magnesium carbonate, magnesium sulfate, magnesium nitrate, calcium oxide, calcium carbonate, calcium sulfate, and calcium nitrate each having a particle size of less than 75 µm is contained in a raw material mixture in a total amount of 0.1% by mass to 5% by mass. One or more types selected from alkali silicate and alkali phosphate are used as a binder, and the amount of usage of cement is limited to 5% by mass or less.

## Description

### TECHNICAL FIELD

The present invention relates to a dry spray material for a firing furnace such as an incinerator, a fluidized-bed furnace, an industrial waste kiln/treatment furnace, a circulating fluidized bed (CFB) boiler furnace, a cement production facility furnace, a gasification melting furnace, or a stoker furnace.

### BACKGROUND ART

Heretofore, there has been known a spraying material in which alumina cement is used a binder (see, for example, the following Patent Document 1). The Patent Document 1 describes that its applications include a blast furnace trough, a torpedo car, etc., and that it is also applicable to an incinerator. However, in a firing furnace for heat-treating (firing or incinerating) furnace contents, like an incinerator, there is a problem that a sprayed deposit serving as a furnace wall of the firing furnace is more likely to receive physical shocks and corrosive actions from the furnace contents being flowing in the furnace.

The spraying material described in the Patent Document 1 is a wet spraying material for use in wet spraying. The wet spraying is a construction method which comprises: preliminarily kneading a raw material mixture and water sufficiently by a mechanical kneading mechanism such as a mixer; introducing air and a quick setting agent (curing agent) into the resulting kneaded material at or just before a spraying nozzle, while pressure-feeding the kneaded material toward the spraying nozzle using a pump; and spraying the resulting mixture. Since the wet spraying requires a mechanical kneading mechanism, the scale of equipment therefor becomes larger than that for dry spraying. Further, in the wet spraying, only a short-length nozzle can be used due to strong reaction force caused by high spraying pressure (pressure during spraying). Therefore, it is necessary for a worker to enter the furnace to perform spraying work, and the spraying work can be performed only in a cold environment. The restriction that only a short-length nozzle can be used also gives rise to a problem that a sprayable area is limited.

Further, there is a technique using cement (alumina cement, Portland cement, magnesia cement, etc.) as a binder of a spraying material for a firing furnace, as described in the Patent Document 1. However, when such cement is used as the binder, a hydration reaction occurs at normal temperature to improve the strength of a sprayed deposit, so that dehydration becomes less likely to occur, which can lead to a risk of explosion when the internal temperature of the furnace rises. Therefore, a drying process is required after spraying. Thus, there is a problem that implementation of the drying process requires costs and a long shutdown duration.

### CITATION LIST

### [Patent Document]

Patent Document 1: JP-B 4263917

### SUMMARY OF INVENTION

### [Technical Problem]

A technical problem to be solved by the present invention is to provide a dry spraying material for a firing furnace, which is free from a need for a drying process after spraying, and capable of withstanding physical shocks from furnace contents.

### [Solution to Technical Problem]

According to one aspect of the present invention, there is provided a dry spraying material for a firing furnace having a furnace wall temperature of 1400°C or less, the dry spraying material being composed of a raw material mixture, the raw material mixture containing: one or more types selected from powdered alkali silicate and powdered alkali phosphate, in a total amount of 2% by mass to 15% by mass; and a basic compound fine powder of one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm, in a total amount of 0.1% by mass to 5% by mass, wherein: an amount of a basic compound coarse powder contained in the raw material mixture is 10% by mass or less (including 0) in total, wherein the basic compound coarse powder is one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of 1 mm to less than 5 mm; an amount of cement contained in the raw material mixture is 5% by mass or less (including 0); and a remainder of the raw material mixture has a composition which is one of the following (1) to (3): (1) the remainder mainly contains an alumina raw material, wherein in addition to the mainly-contained alumina raw material, the remainder includes at least one type selected from the group consisting of a silica raw material, an alumina-silica raw material, and a zircon raw material; (2) the remainder mainly contains an alumina-silica raw material; and (3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material, whereby a SiO₂ component derived from raw materials having a particle size of less than 75 µm and an Al₂O₃ component derived from raw materials having a particle size of less than 75 µm are contained in the raw material mixture, respectively, in an amount of 1% by mass to 10% by mass and in an amount of 5% by mass to 40% by mass.

According to another aspect of the present invention, there is provided a dry spraying material for a firing furnace having a furnace wall temperature of 1400°C or less, the dry spraying material being composed of a raw material mixture and a liquid binder, wherein: the liquid binder is one or more types selected from liquid alkali silicate and liquid alkali phosphate, wherein an addition amount of the liquid binder is 5% by mass to 40% by mass; and the raw material mixture contains a basic compound fine powder of one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm, in a total amount of 0.1% by mass to 5% by mass, wherein: an amount of a basic compound coarse powder contained in the raw material mixture is 10% by mass or less (including 0) in total, wherein the basic compound coarse powder is one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of 1 mm to less than 5 mm; an amount of cement contained in the raw material mixture is 5% by mass or less (including 0); and a remainder of the raw material mixture has a composition which is one of the following (1) to (3): (1) the remainder mainly contains an alumina raw material, wherein in addition to the mainly-contained alumina raw material, the remainder includes at least one type selected from the group consisting of a silica raw material, an alumina-silica raw material, and a zircon raw material; (2) the remainder mainly contains an alumina-silica raw material; and (3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material, whereby a SiO₂ component derived from raw materials having a particle size of less than 75 µm and an Al₂O₃ component derived from raw materials having a particle size of less than 75 µm are contained in the dry spraying material, respectively, in an amount of 1% by mass to 10% by mass and in an amount of 5% by mass to 40% by mass.

Here, the term "particle size" used in the present invention means the size of a sieve mesh when raw material particles are sieved and separated. For example, the basic compound fine powder having a particle size of less than 75 µm means basic compound fine particles which pass through a sieve having a sieve mesh of 75 µm, and the basic compound coarse powder having a particle size of 1 mm or more means basic compound coarse particles which do not pass through a sieve having a sieve mesh of 1 mm.

### [Effect of Invention]

According to the present invention, although the details will be described later, through reactions among the basic compound fine powder having a particle size of less than 75 µm, the SiO₂ component derived from raw materials having a particle size of less than 75 µm, and the Al₂ O₃ component derived from raw materials having a particle size of less than 75 µm, cordierite, gehlenite or anorthite is generated and thereby the strength of a sprayed deposit is improved. Further, when alkali silicate is used, an effect of formation of a glass coating through a reaction between the alkali silicate and the Al₂O₃ component derived from raw materials having a particle size of less than 75 µm, and a strength-improving effect from the generation of cordierite or the like, are combined to enable withstanding the physical shock from the furnace contents. On the other hand, when alkali phosphate is used, the alkali phosphate reacts with the basic compound fine powder having a particle size of less than 75 µm to generate magnesium orthophosphate, calcium orthophosphate or the like having high refractoriness, and thereby provide improve refractoriness. This refractoriness-improving effect and the strength-improving effect from the generation of cordierite or the like are combined to enable withstanding the physical shock from the furnace contents.

When cement is used, the hydration reaction occurs at normal temperature to improve the strength of a sprayed deposit and preclude dehydration, which can lead to a risk of explosion when the internal temperature of the furnace rises, thereby giving rise to a need for a drying process after spraying, as mentioned above. In the present invention, the content of cement is limited to 5 mass % or less (including 0), and the above-mentioned glass coating, cordierite or the like is generated in the course in which the internal temperature of the furnace rises, so that the risk of explosion is reduced. This eliminates the need for a drying process after spraying.

### DESCRIPTION OF EMBODIMENTS

A dry spraying material according to one embodiment (hereinafter referred to as "first embodiment") of the present invention is designed for a firing furnace having a furnace wall temperature of 1400°C or less, and is composed of a raw material mixture to be pneumatically transported to or just before a nozzle. Further, a dry spraying material according to another embodiment (hereinafter referred to as "second embodiment") of the present invention is designed for a firing furnace having a furnace wall temperature of 1400°C or less, and is composed of a raw material mixture to be pneumatically transported to or just before a nozzle, and a liquid binder to be added to raw material mixture at or just before the nozzle. Firstly, the dry spraying material according to the first embodiment will be described.

The raw material mixture which is the dry spraying material according to the first embodiment contains, as a powder binder: one or more types selected from powdered alkali silicate and powdered alkali phosphate, in a total amount of 2% by mass to 15% by mass; and a basic compound fine powder of one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm, in a total amount of 0.1 % by mass to 5% by mass. Further, a SiO₂ component derived from raw materials having a particle size of less than 75 µml and an Al₂O₃ component derived from raw materials having a particle size of less than 75 µm are is contained in the raw material mixture, respectively, in an amount of 1% by mass to 10% by mass and in an amount of 5% by mass to 40% by mass.

In the first embodiment, in a temperature region where a furnace wall temperature is 1400°C or less, through reactions among the basic compound fine powder having a particle size of less than 75 µm, the SiO₂ component derived from raw materials having a particle size of less than 75 µm, and the Al₂O₃ component derived from raw materials having a particle size of less than 75 µm, cordierite (2MgO · 2Al₂O₃ • 5SiO₂), gehlenite (2CaO • Al₂O₃ • SiO₂) or anorthite (CaO • Al₂O₃ • 2SiO₂) is generated to improve the strength of a sprayed deposit. Further, when alkali silicate is used, in the temperature region where the furnace wall temperature is 1400°C or less, mainly through a reaction between the alkali silicate and the Al₂O₃ component derived from raw materials having a particle size of less than 75 µm, a glass coating is formed. Then, this glass coating-formation effect and the strength-improving effect from the generation of cordierite or the like are combined to enable withstanding physical shock from furnace contents. It should be noted here that since the glass coating melts in a temperature region exceeding 1400°C, the above effect cannot be obtained. Therefore, the application of the dry spraying material of the present invention is limited to a firing furnace having a furnace wall temperature of 1400°C or less. Preferably, the furnace wall temperature is 1200°C or less. The lower limit of the furnace wall temperature is not particularly limited. Although the lower limit of the furnace wall temperature is determined by the lower limit of a firing temperature of the firing furnace, it is preferably set to about 800°C or more from a viewpoint of reliably obtaining the glass coating-formation effect.

On the other hand, when alkali phosphate is used, in the temperature region where the furnace wall temperature is 1400°C or less, mainly through a reaction between the alkali phosphate and the basic compound fine powder having a particle size of less than 75 µm, magnesium orthophosphate, calcium orthophosphate or the like having high refractoriness is generated to provide improved refractoriness. Then, this refractoriness-improving effect and the strength-improving effect from the generation of cordierite or the like are combined to enable withstanding the physical shock from the furnace contents. It is to be understood that when alkali silicate and alkali phosphate are used in combination, both the glass coating-formation effect and the refractoriness-improving effect can be obtained.

If the content of the one or more types selected from powdered alkali silicate and powdered alkali phosphate is less than 2% by mass in total, neither the glass coating-formation effect nor the refractoriness-improving effect can be obtained. Moreover, due to the insufficiency of a binding property, corrosion resistance, and bondability of the dry spraying material with respect to a furnace wall (hereinafter referred to simply as "bondability") deteriorate. On the other hand, if the above content exceeds 15% by mass, a low melting-point substance is formed, leading to deterioration in the corrosion resistance. Preferably, the content of the one or more types selected from powdered alkali silicate and powdered alkali phosphate is set in the range of 3.5% by mass to 10% by mass in total. Here, the term "powdered alkali silicate" means one or more types selected from the group consisting typically of powdered sodium silicate, powdered lithium silicate, powdered potassium silicate, and powdered calcium silicate. Further, the term "powdered alkali phosphate" means one or more types selected from the group consisting typically of powdered sodium phosphate, powdered lithium phosphate, powdered potassium phosphate, and powdered calcium phosphate.

Further, if the content of the basic compound fine powder having a particle size of less than 75 µm is less than 0.1% by mass, the strength-improving effect from the generation of cordierite or the like cannot be obtained. On the other hand, if the content exceeds 5% by mass, thermal expansion and contraction become significant, leading to deterioration in the bondability. Preferably, the content of the basic compound fine powder having a particle size of less than 75 µm is set in the range of 0.2% by mass to 3% by mass in total. The basic compound fine powder having a particle size of less than 75 µm is one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm. Among them, magnesium oxide is most preferable from the viewpoint that it is low in volatile matter content, and relatively excellent in slaking (hydration) resistance. As the magnesium oxide, it is possible to use fused magnesium, heavy-burnt magnesium, light-burnt magnesium, or the like. Here, the basic compound fine powder having a particle size of less than 75 µm may be composed of, e.g., a magnesium oxide fine powder and a calcium oxide fine powder, wherein the magnesium oxide fine powder and the calcium oxide fine powder are contained in the raw material mixture, independently, or may be composed of, e.g., a burnt dolomite fine power, i.e., a complex of magnesium oxide and calcium oxide, wherein the magnesium oxide and the calcium oxide are contained in the raw material mixture in a complex form. It should be noted that the term "calcium oxide" used in this specification is defined as a calcium oxide, except for a cement-derived calcium oxide such as alumina cement, Portland cement, or magnesia cement. This is because the cement-derived calcium oxide is less likely to contribute to the generation of cordierite or the like.

In the raw material mixture, the content of a basic compound coarse powder having a particle size of 1 mm to less than 5 mm is limited to 10% by mass or less (including 0) in total. This is because if the content of the basic compound coarse powder having a particle size of 1 mm to less than 5 mm exceeds 10% by mass, thermal expansion and contraction become significant, leading to deterioration in the bondability. Preferably, the content of the basic compound coarse powder having a particle size of 1 mm to less than 5 mm is set to 5% by mass or less (including 0).

The raw material mixture in the first embodiment comprises the powdered alkali silicate and/or the powdered alkali phosphate, the basic compound fine powder having a particle size of less than 75 µm, etc., as mentioned above, wherein the remainder of the raw material mixture has a composition which is one of the following (1) to (3):
(1) the remainder mainly contains an alumina raw material, wherein in addition to the mainly-contained alumina raw material, the remainder includes at least one type selected from the group consisting of a silica raw material, an alumina-silica raw material, and a zircon raw material;
(2) the remainder mainly contains an alumina-silica raw material; and
(3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material.

The composition (1) in which an alumina raw material is mainly contained in the remainder of the raw material mixture is particularly suitable for applications having a high requirement for heat resistance.

The composition (2) in which an alumina-silica raw material is mainly contained in the remainder of the raw material mixture is particularly suitable for applications having a requirement for heat resistance which is not as high as the (1), and is effective from a viewpoint of reducing raw material costs.

The composition (3) in which a silicon carbide raw material is mainly contained in the remainder of the raw material mixture is particularly suitable for applications having high requirements for abrasion resistance and corrosion resistance.

The term "mainly" here means that the content of each raw material exceeds 50% by mass in terms of a percentage of 100% by mass, the total amount, of the raw material mixture.

The remainder of the raw material mixture will be described in more detail. In the composition (1) in which an alumina raw material is mainly contained in the remainder of the raw material mixture, the remainder includes at least one type selected from the group consisting of a silica raw material, an alumina-silica raw material, and a zircon raw material, in addition to the mainly-contained alumina raw material. This is intended to ensure both the after-mentioned raw material-derived SiO₂ and Al₂O₃ components. That is, in composition (1), the raw material-derived Al₂O₃ component is ensured by the mainly-contained alumina raw material, and the raw material-derived SiO₂ is ensured by at least one type selected from the group consisting of the silica raw material, the alumina-silica raw material and the zircon (ZrO₂-SiO₂) raw material.

On the other hand, in the composition (2) in which an alumina-silica raw material is mainly contained in the remainder of the raw material mixture, there is no need to include any refractory raw material other than the mainly-contained alumina-silica raw material. This is because, in the composition (2), both the raw material-derived SiO₂ and Al₂O₃ components can be ensured by the mainly-contained alumina-silica raw material.

Further, in the composition (3) in which a silicon carbide raw material is mainly contained in the remainder of the raw material mixture, the remainder includes an alumina-silica raw material, or includes an alumina raw material and at least one of a silica raw material and a zircon raw material, in addition to the mainly-contained silicon carbide raw material. That is, in the composition (3), there are two cases: one case where the remainder includes an alumina-silica raw material, in addition to the mainly-contained silicon carbide raw material, and the other case where the remainder includes an alumina raw material and at least one of a silica raw material and a zircon raw material, in addition to the mainly-contained silicon carbide raw material. In the former case, both the raw material-derived SiO₂ and Al₂O₃ components are ensured by the alumina-silica raw material, and in the latter case, the raw material derived Al₂O₃ component is ensured by the alumina raw material, and the raw material-derived SiO₂ component is ensured by at least one of the silica raw material and the zircon raw material.

The remainder may appropriately include: a refractory raw material other than the aforementioned refractory raw materials: a powdered binder (alumina cement, etc.) other than the powdered alkali silicate and the powdered alkali phosphate; a curing regulator (sulfate, slaked lime, etc.); and an explosion inhibitor (organic fiber, etc.). However, when a large amount of cement is contained, explosion during drying is likely to occur as mentioned above. Thus, the content of cement is limited to 5% by mass or less (including 0). Preferably, the content of cement is set to 2% by mass or less (including 0).

In the first embodiment, the SiO₂ component derived from raw materials having a particle size of less than 75 µm and the Al₂O₃ component derived from raw materials having a particle size of less than 75 µm are contained in the raw material mixture, respectively, in an amount of 1% by mass to 10% by mass and in an amount of 5% by mass to 40% by mass. If the content of the SiO₂ component derived from raw materials having a particle size of less than 75 µm is less than 1% by mass, the strength-improving effect from the generation of cordierite or the like cannot be obtained. On the other hand, if the content exceeds 10% by mass, a low melting-point substance is formed, leading to deterioration in corrosion resistance. Further, if the content of the Al₂O₃ component derived from raw materials having a particle size of less than 75 µm is less than 5% by mass, neither the aforementioned glass coating-formation effect nor the refractoriness-improving effect can be obtained. On the other hand, if the content exceeds 40% by mass, the amount of water added during spraying is increases, leading to impaired denseness of a sprayed deposit and deterioration in corrosion resistance. The content of the SiO₂ component derived from raw materials having a particle size of less than 75 µm is preferably set in the range of 3% by mass to 7% by mass, and the content of the Al₂O₃ component derived from raw materials having a particle size of less than 75 µm is preferably set in the range of 25% by mass to 38% by mass. Here, the SiO₂ component (Al₂O₃ component) derived from raw materials having a particle size of less than 75 µm is a sum of: a SiO₂ component (Al₂O₃ component) as a main component or impurity component comprised in the refractory raw materials (alumina raw material, silica raw material, alumina-silica raw material, etc.) and other raw materials (curing regulator, etc.) each having a particle size of less than 75 µm; a SiO₂ component (Al₂O₃ component) as a main component or impurity component comprised in alkali silicate and alkali phosphate each having a particle size of less than 75 µm; and a SiO₂ component (Al₂O₃ component) as an impurity component comprised in the basic compound fine powder having a particle size of less than 75 µm. These can be identified by a raw material composition of the dry spraying material.

In the first embodiment, the raw material mixture is pneumatically transported to or just before a nozzle, and after adding water thereto at or just before the nozzle, sprayed to a firing furnace. Although the amount of water added may be appropriately determined such that the degree of spraying softness of the dry spraying material composed of the raw material mixture falls within an appropriate range, it may be set in the range of about 10% by mass to about 15% by mass, with respect to and in addition to 100% by mass, the total amount, of the raw material mixture.

Here, from a viewpoint of preventing the raw material mixture which is pneumatically transported to or just before the nozzle from adhering to an inner surface of a transport pipe and clogging the transport pipe, the amount of water contained in the raw material mixture (water content of the raw material mixture) is preferably 1% by mass or less. The water content of the raw material mixture is measured according to the loss-on-drying method defined in JIS K0068. Specifically, a sample is heated and dried at 105°C until it has a constant mass. Then, a weight loss after drying is measured, and the measured loss is defined as the water content.

In the first embodiment, a liquid binder (one or more types selected from liquid alkali silicate and liquid alkali phosphate) may be added at or just before the nozzle to the extent that the effect of the present invention is impaired, and water may also be added in combination with the liquid binder.

Next, the dry spraying material according to the second embodiment will be described. The dry spraying material according to the second embodiment is composed of a raw material mixture which is pneumatically transported to or just before a nozzle, and a liquid binder which is added thereto at or just before the nozzle. In the second embodiment, the liquid binder is one or more types selected from liquid alkali silicate and liquid alkali phosphate. Here, differently from the first embodiment in which the powdered binder (one or more types selected from powdered alkali silicate and powdered alkali phosphate) is contained in the raw material mixture which is pneumatically transported to or before the nozzle, in the second embodiment, the liquid binder (one or more types selected from liquid alkali silicate and liquid alkali phosphate) is added to the raw material mixture which is pneumatically transported to or before the nozzle, at or just before the nozzle. As above, the first embodiment and the second embodiment are different from each other in terms of the form or state of the binder, but resemble each other in terms of a basic technical idea for solving the technical problem as described below.

Specifically, in the second embodiment, the raw material mixture which is pneumatically transported to or before the nozzle contains a basic compound fine powder having a particle size of less than 75 µm, in a total amount of 0.1% by mass to 5% by mass. Then, in the second embodiment, the liquid binder (one or more types selected from liquid alkali silicate and liquid alkali phosphate) is added to the raw material mixture at or just before the nozzle. The dry spraying material according to the second embodiment is composed of the raw material mixture and the liquid binder, as mentioned above, wherein a SiO₂ component derived from raw materials having a particle size of less than 75 µm and an Al₂O₃ component derived from raw materials having a particle size of less than 75 µm are contained in the dry spraying material, respectively, in an amount of 1% by mass to 10% by mass and in an amount of 5% by mass to 40% by mass.

As above, in the dry spraying material according to the second embodiment, respective contents of a basic compound fine powder having a particle size of less than 75 µm, a SiO₂ component derived from raw materials having a particle size of less than 75 µm, and an Al₂O₃ component derived from raw materials having a particle size of less than 75 µm are the same as those in the first embodiment, and respective preferred ranges of the contents are also the same as those in the first embodiment. In the dry spraying material according to the second embodiment, the composition of the liquid binder is also the same as that of the powdered binder in the first embodiment.
Thus, as with the first embodiment, in the second embodiment, in a temperature region where a furnace wall temperature is 1400°C or less, through reactions among the basic compound fine powder having a particle size of less than 75 µm, the SiO₂ component derived from raw materials having a particle size of less than 75 µm, and the Al₂O₃ component derived from raw materials having a particle size of less than 75 µm, cordierite (2MgO • 2Al₂O₃ • 5SiO₂), gehlenite (2CaO • Al₂O₃ • SiO₂) or anorthite (CaO • Al₂O₃ • 2SiO₂) is generated to improve the strength of a sprayed deposit. Further, when alkali silicate is used as the binder, in the temperature region where the furnace wall temperature is 1400°C or less, mainly through a reaction between the alkali silicate and the Al₂O₃ component derived from raw materials having a particle size of less than 75 µm, a glass coating is formed. Then, this glass coating-formation effect and the strength-improving effect from the generation of cordierite or the like are combined to enable withstanding physical shock from furnace contents. On the other hand, when alkali phosphate is used as the binder, in the temperature region where the furnace wall temperature is 1400°C or less, mainly through a reaction between the alkali phosphate and the basic compound fine powder having a particle size of less than 75 µm, magnesium orthophosphate, calcium orthophosphate or the like having high refractoriness is generated to provide improved refractoriness. Then, this refractoriness-improving effect and the strength-improving effect from the generation of cordierite or the like are combined to enable withstanding the physical shock from the furnace contents. It is to be understood that when alkali silicate and alkali phosphate are used in combination in the second embodiment, both the glass coating-formation effect and the refractoriness-improving effect can be obtained.

In the second embodiment, the addition amount of the liquid binder is set in the range of 5% by mass to 40% by mass. If the amount is less than 5% by mass, neither the glass coating-formation effect nor the refractoriness-improving effect can be obtained. Moreover, due to the insufficiency of a binding property, corrosion resistance, and bondability deteriorate. On the other hand, if the amount exceeds 40% by mass, a low melting-point substance is formed, leading to deterioration in the corrosion resistance. In the second embodiment, the addition amount of the liquid binder is preferably set in the range of 8% by mass to 30% by mass. As used in the present invention, the term "addition amount" means an addition amount with respect to and in addition to the total amount, 100% by mass, of the raw material mixture.

In the second embodiment, the liquid binder is one or more types selected from liquid alkali silicate and liquid alkali phosphate, as mentioned above. Here, the term "liquid alkali silicate" means one or more types selected from the group consisting typically of liquid sodium silicate, liquid lithium silicate, liquid potassium silicate, and liquid calcium silicate. Further, the term "liquid alkali phosphate" means one or more types selected from the group consisting typically of liquid sodium phosphate, liquid lithium phosphate, liquid potassium phosphate, and liquid calcium phosphate. The liquid binder contains water in a solid content of alkali silicate or alkali phosphate, and the solid content concentration thereof is adjusted in the range of about 5 to 50% by mass with respect to 100% by mass of the liquid binder.

In the second embodiment, the liquid binder to be added at or just before the nozzle or nozzle is preferably added from one transport path. Alternatively, it may be added from a plurality of transport paths, wherein the addition amount of liquid binder is a total amount of respective liquid binders added from the plurality of transport paths. In this case, a plurality of types of liquid binders having different solid content concentrations may be added from the plurality of transport paths, respectively. Further, water may be added from a transport path different from the transport path for the liquid binder. In this case, water added from the different transport path is mixed with and contained in the liquid binder.

In the second embodiment, the amount of a basic compound coarse powder contained in the raw material mixture and having a particle size of 1 mm to less than 5 mm is limited to 10% by mass or less (including 0), preferably 5% by mass or less (including 0), in total, as with the first embodiment. Further, in the second embodiment, the remainder of the raw material mixture has a composition which is one of the following (1) to (3), as with the first embodiment:
(1) the remainder mainly contains an alumina raw material, wherein in addition to the mainly-contained alumina raw material, the remainder includes at least one type selected from the group consisting of a silica raw material, an alumina-silica raw material, and a zircon raw material;
(2) the remainder mainly contains an alumina-silica raw material; and
(3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material,

The remainder may appropriately include: a refractory raw material other than the aforementioned refractory raw materials; a powdered binder (alumina cement, etc.); a curing regulator (sulfate, slaked lime; etc.); and an explosion inhibitor (organic fiber, etc.). However, when a large amount of cement is contained, explosion during drying is likely to occur as mentioned above. Thus, the content of cement is limited to 5% by mass or less (including 0). Preferably, the content of cement is set to 2% by mass or less (including 0). In the second embodiment, a powdered binder (one or more types selected from powdered alkali silicate and powdered alkali phosphate) may be contained in the raw material mixture to the extent that the effects of the present invention are not impaired.

As mentioned above, the dry spraying material in the second embodiment contains a SiO₂ component derived from raw materials having a particle size of less than 75 µm and an Al₂O₃ component derived from raw materials having a particle size of less than 75 µm, respectively, in an amount of 1% by mass to 10% by mass and in an amount of 5% by mass to 40% by mass. If the content of the SiO₂ component derived from raw materials having a particle size of less than 75 µm is less than 1% by mass, the strength-improving effect from the generation of cordierite or the like cannot be obtained. On the other hand, if the content exceeds 10% by mass, a low melting-point substance is formed, leading to deterioration in corrosion resistance. Further, if the content of the Al₂O₃ component derived from raw materials having a particle size of less than 75 µm is less than 5% by mass, neither the aforementioned glass coating-formation effect nor the refractoriness-improving effect can be obtained. On the other hand, if the content exceeds 40% by mass, the amount of water in the liquid binder added at or just before the nozzle has to be excessively increased, leading to impaired denseness of a sprayed deposit and deterioration in corrosion resistance. Here, the SiO₂ component (Al₂O₃ component) derived from raw materials having a particle size of less than 75 µm is a sum of a SiO₂ component (Al₂O₃ component) as a main component or impurity component comprised in the refractory raw materials (alumina raw material, silica raw material, alumina-silica raw material, etc.) and other raw materials (curing regulator. etc.) each having a particle size of less than 75 µm; a SiO₂ component (Al₂O₃ component) as a main component or impurity component comprised in alkali silicate and alkali phosphate contained in the liquid binder and each having a particle size of less than 75 µm; and a SiO₂ component (Al₂O₃ component) as an impurity component comprised in the basic compound fine powder having a particle size of less than 75 µm. These can be identified by a raw material composition of the dry spraying material.

In the second embodiment, from a viewpoint of preventing the raw material mixture which is pneumatically transported to or just before the nozzle from adhering to an inner surface of the transport pipe and clogging the transport pipe, the water content of the raw material mixture is preferably 1% by mass or less, as with the first embodiment. In the second embodiment, the addition amount and the solid content concentration of the liquid binder are appropriately adjusted to allow the degree of spraying softness of the dry spraying material to fall within an appropriate range.

### EXAMPLES

Table 1 shows Inventive Examples according to the first embodiment, and Table 2 shows Comparative Examples thereto.

Each dry spraying material in the Inventive and Comparative Examples shown in Tables 1 and 2 was evaluated in terms of abrasion resistance, corrosion resistance, bondability, and explosion resistance, and then comprehensively evaluated based on evaluation results of these evaluation items. In Tables 1 and 2, "alkali silicate (powder)" means one or more types selected from the group consisting of powdered sodium silicate, powdered lithium silicate, powdered potassium silicate, and powdered calcium silicate, and "alkali phosphate (powder)" means one or more types selected from the group consisting of powdered sodium phosphate, powdered lithium phosphate, powdered potassium phosphate, and powdered calcium phosphate.

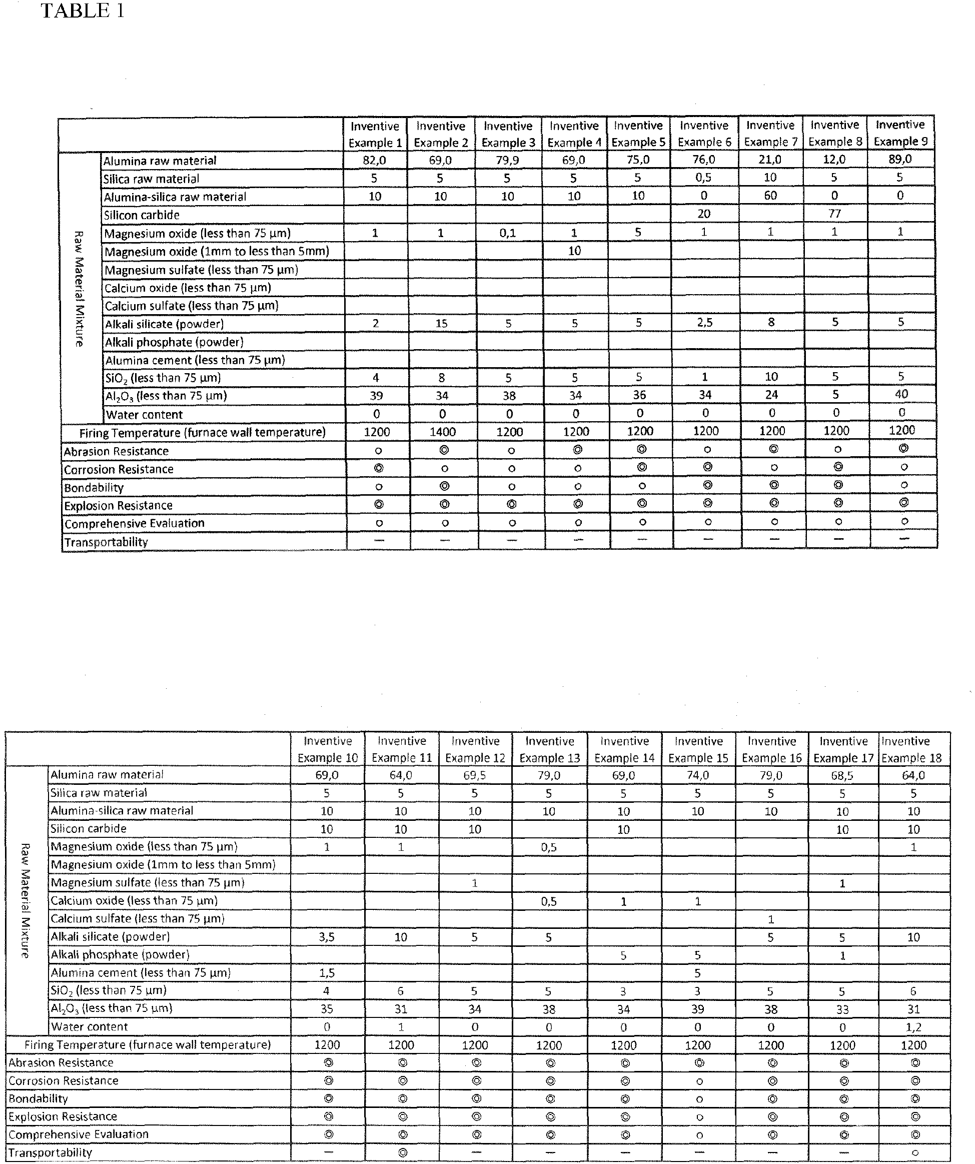

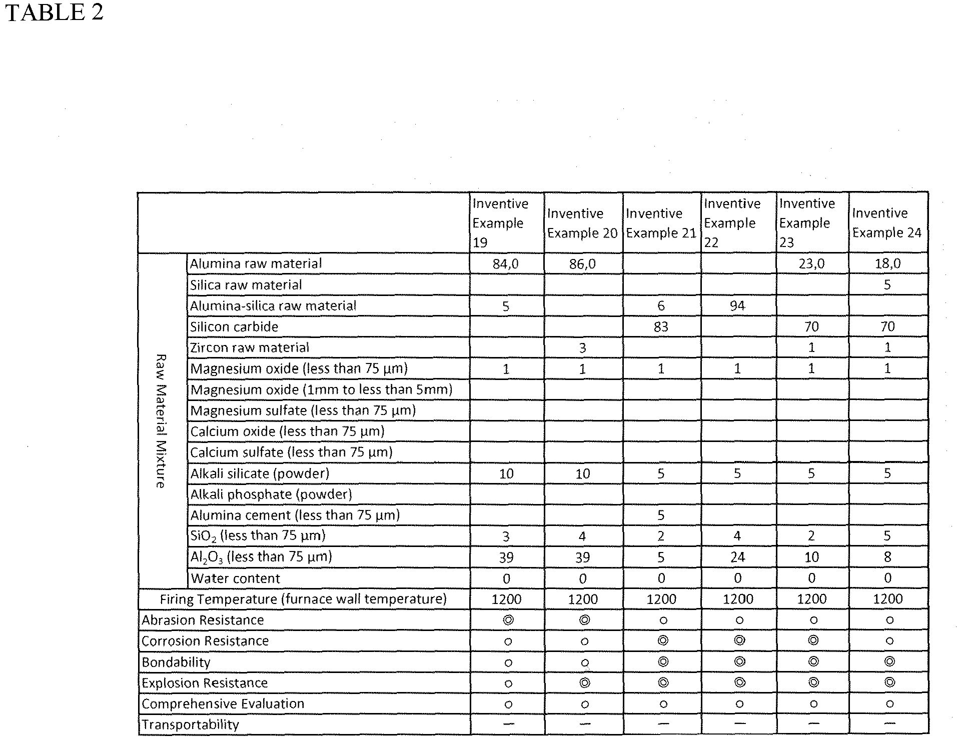

An evaluation method and an evaluation criteria for each evaluation item are as follows.

### < Abrasion Resistance >

A diy spraying material in each Example was subjected to kneading under a water content assuming an appropriate degree of spraying softness and shaping to obtain a sample, and the sample was fired at a firing temperature (see Table 1) assuming a furnace wall temperature of a firing furnace. Then, abrasion loss was evaluated by sandblasting

A sample having an abrasion loss of less than 10 cc was evaluated as ⊚ (Excellent), and a sample having an abrasion loss of 10 cc to less than 15 cc was evaluated as ∘ (Good). Further, a sample having an abrasion loss of 15 cc or more was evaluated as × (NG).

### <Corrosion Resistance >

A dry spraying material in each Example were subjected to kneading under a water content assuming an appropriate degree of spraying softness and shaping to obtain a crucible-shaped sample, and the sample was fired at a firing temperature (see Table 1) assuming the furnace wall temperature of the firing furnace. Then, 30g of corrosive agent was put in the crucible-shaped sample, and the sample was further heated at the firing temperature assuming the furnace wall temperature, for 12 hours. After that, a corrosion state was checked. As the corrosive agent, a synthetic slug comprising 60% by mass of CaO, 10% by mass of MgO, 10% by mass of K₂O, and 20% by mass of P₂O₅ was used. The maximum wear area in each Example was measured, and a relative value with respect to 100 which corresponds to the maximum wear area in Inventive Example 7 was determined. A sample having a smaller relative value indicates that it has a better corrosion resistance.

A sample having a relative value of less than 100 was evaluated as ⊚ (Excellent), and a sample having a relative value of 100 to less than 120 was evaluated as ∘ (Good). Further, a sample having a relative value of 120 or more was evaluated as × (NG).

### < Bondability >

As an index representing bondability, bonding strength was measured. The bonding strength was measured by the following method assuming hot spraying. A brick is set in an atmosphere at 700°C, and a tubular metal frame is placed on the brick. A dry spraying material (serving as a sprayed material) kneaded with an appropriate amount of water is cast in the metal frame, and after the elapse of a certain time, a shear strength between the sprayed material and the brick is measured while the metal frame is placed on the brick. In Table 1, the shear strength is shown as a value indexed on the assumption that the shear strength in Inventive Example 1 is 100.

A sample having an index of 110 or more was evaluated as ⊚ (Excellent), and a sample having an index of 100 to less than 110 was evaluated as ∘ (Good). Further, a sample having an index of less than 100 was evaluated as × (NG).

### < Explosion Resistance >

A dry spraying material in each Example was subjected to kneading under a water content assuming an appropriate degree of spraying softness and shaping to obtain a sample, and the sample was put in an atmosphere at 1000°C to evaluate the degree of explosion.

A sample having neither expulsion nor microcracks was evaluated as ⊚ (Excellent), and a sample having no explosion but having microcracks was evaluated as ∘ (Good). Further, a sample having explosion was evaluated as × (NG).

### < Comprehensive Evaluation >

A sample in which all the evaluation items were evaluated as ⊚ was determined as ⊚ (Excellent), and a sample in which there is no × evaluation, but any one of the evaluation items was evaluated as ∘ was determined as ∘ (Good). Further, a sample in which any one of the evaluation items was evaluated as × was determined as × (NG).

For Inventive Examples 11 and 18, transportability was also evaluated. With regard to the transportability, a sample in which there is no pulsation in the material just after sprayed from the nozzle was evaluated as ⊚ (Excellent), and a sample in which there is slight pulsation in the material just after sprayed from the nozzle was evaluated as ∘ (Good).

In Table 1, Inventive Examples 1 to 24 are dry spraying materials each falling within the scope of the present invention as defined by the appended claims. Each of their comprehensive evaluations is ⊚ (Excellent) or o (Good), and good evaluation was obtained in all the evaluation items: abrasion resistance, corrosion resistance, bondability, and explosion resistance. Among them, Inventive Examples 10 to 14 and 16 to 18 are dry spraying materials in each of which the content of each component of the raw material mixture falls within the aforementioned preferred range. Each of their comprehensive evaluations is ⊚ (Excellent), and better evaluations than those in other Inventive Examples could be obtained. It should be noted that Inventive Example 13 was prepared by adding a burnt dolomite fine powder having a particle size of less than 75 µm to the raw material mixture to complexly incorporate magnesium oxide and calcium oxide.

With regard to transportability, pulsation slightly occurred in Inventive Example 18 in which the water content of the raw material mixture exceeds 1% by mass, but no pulsation occurred in Inventive Example 11 in which the water content of the raw material mixture is 1% by mass or less.

In Table 2, Comparative Example 1, which is an example where the content of (powdered) alkali silicate is excessively small, was evaluated as × (NG), in terms of abrasion resistance, corrosion resistance and bondability.

Comparative Example 2, which is an example where the content of (powdered) alkali silicate is excessively large, was evaluated as × (NG), in terms of corrosion resistance.

Comparative Example 3, which is an example where the basic compound fine powder (magnesium oxide fine powder) having a particle size of less than 75 µm is not contained, was evaluated as × (NG), in terms of abrasion resistance.

Comparative Example 4, which is an example where the content of the basic compound fine powder (magnesium oxide fine powder) having a particle size of less than 75 µm is excessively large, was evaluated as × (NG), in terms of bondability.

Comparative Example 5, which is an example where the content of the basic compound coarse powder (magnesium oxide coarse powder) having a particle size of 1 mm to less than 5 mm is excessively large, was evaluated as × (NG), in terms of bondability.

Comparative Example 6, which is an example where the content of the SiO₂ component derived from raw materials having a particle size of less than 75 µm is excessively small, was evaluated as × (NG), in terms of abrasion resistance.

Comparative Example 7, which is an example where the content of the SiO₂ component derived from raw materials having a particle size of less than 75 µm is excessively large, was evaluated as × (NG), in terms of corrosion resistance.

Comparative Example 8, which is an example where the content of the Al₂O₃ component derived from raw materials having a particle size of less than 75 µm is excessively small, was evaluated as × (NG), in terms of abrasion resistance.

Comparative Example 9, which is an example where the content of the Al₂O₃ component derived from raw materials having a particle size of less than 75 µm is excessively large, was evaluated as × (NG), in terms of corrosion resistance and bondability.

Comparative Example 10, which is an example where a firing temperature assuming a furnace wall temperature of a firing furnace is excessively high, was evaluated as × (NG), in terms of abrasion resistance.

Comparative Example 11, which is an example where the content of alumina cement is excessively large, was evaluated as × (NG), in terms of explosion resistance.

Table 3 shows Inventive Examples according to the second embodiment, and Table 4 shows Comparative Examples thereto.

Each dry spraying material in the Inventive and Comparative Examples shown in Tables 3 and 4 was evaluated in terms of abrasion resistance, corrosion resistance, bondability, and explosion resistance, and then comprehensively evaluated based on evaluation results of these evaluation items. In Tables 3 and 4, "alkali silicate (liquid)" means one or more types selected from the group consisting of liquid sodium silicate, liquid lithium silicate, liquid potassium silicate, and liquid calcium silicate, and "alkali phosphate (liquid)" means one or more types selected from the group consisting of liquid sodium phosphate, liquid lithium phosphate, liquid potassium phosphate, and liquid calcium phosphate.

TABLE 3

TABLE 4

An evaluation method and an evaluation criteria for each evaluation item are as follows.

### < Abrasion Resistance >

A dry spraying material in each Example was subjected to kneading and shaping to obtain a sample, and the sample was fired at a firing temperature (see Table 1) assuming an appropriate degree of spraying softness and shaping, and the sample was fired at a firing temperature (see Table 1) assuming a furnace wall temperature of a firing furnace. Then, abrasion loss was evaluated by sandblasting

A sample having an abrasion loss of less than 10 cc was evaluated as ⊚ (Excellent), and a sample having an abrasion loss of 10 cc to less than 15 cc was evaluated as ∘ (Good). Further, a sample having an abrasion loss of 15 cc or more was evaluated as × (NG).

### <Corrosion Resistance >

A dry spraying material in each Example was subjected to kneading and shaping to obtain a crucible-shaped sample, and the sample was fired at a firing temperature (see Table 1) assuming the furnace wall temperature of the firing furnace. Then, 30g of corrosive agent was put in the crucible-shaped sample, and the sample was further heated at the firing temperature assuming the furnace wall temperature, for 12 hours. After that, a corrosion state was checked. As the corrosive agent, a synthetic slug comprising 60% by mass of CaO, 10% by mass of MgO, 10% by mass of K₂O, and 20% by mass of P₂O₅ was used. The maximum wear area in each Example was measured, and a relative value with respect to 100 which corresponds to the maximum wear area in Inventive Example 27 was determined. A sample having a smaller relative value indicates that it has a better corrosion resistance.

A sample having a relative value of less than 100 was evaluated as ⊚ (Excellent), and a sample having a relative value of 100 to less than 120 was evaluated as ∘ (Good). Further, a sample having a relative value of 120 or more was evaluated as × (NG).

### < Bondability >

As an index representing bondability, bonding strength was measured. The bonding strength was measured by the following method assuming hot spraying. A brick is set in an atmosphere at 700°C, and a tubular metal frame is placed on the brick. A kneaded dry spraying material (serving as a sprayed material) is cast in the metal frame, and after the elapse of a certain time, a shear strength between the sprayed material and the brick is measured while the metal frame is placed on the brick. In Table 2, the shear strength is shown by a value indexed on the assumption that the shear strength in Inventive Example 21 is 100.

A sample having an index of 110 or more was evaluated as ⊚ (Excellent), and a sample having an index of 100 to less than 110 was evaluated as ∘ (Good). Further, a sample having an index of less than 100 was evaluated as × (NG).

### < Explosion Resistance >

A dry spraying material in each Example was subjected to kneading and shaping to obtain a sample, and the sample was put in an atmosphere at 1000°C to evaluate the degree of explosion.

A sample having neither expulsion nor microcracks was evaluated as ⊚ (Excellent), and a sample having no explosion but having microcracks was evaluated as ∘ (Good). Further, a sample having explosion was evaluated as × (NG).

### < Comprehensive Evaluation >

A sample in which all the evaluation items were evaluated as ⊚ was determined as ⊚ (Excellent), and a sample in which there is no × evaluation, but any one of the evaluation items was evaluated as ∘ was determined as ∘ (Good). Further, a sample in which any one of the evaluation items was evaluated as × was determined as × (NG).

For Inventive Examples 41 and 48, transportability was also evaluated. With regard to the transportability, a sample in which there is no pulsation in the material just after sprayed from the nozzle was evaluated as ⊚ (Excellent), and a sample in which there is slight pulsation in the material just after sprayed from the nozzle was evaluated as ∘ (Good).

In Table 3, Inventive Examples 31 to 54 are dry spraying materials each falling within the scope of the present invention as defined by the appended claims. Each of their comprehensive evaluations is ⊚ (Excellent) or o (Good), and good evaluation was obtained in all the evaluation items: abrasion resistance, corrosion resistance, bondability, and explosion resistance. Among them, Inventive Examples 40 to 44 and 46 to 48 are dry spraying materials in each of which the content of each component of the raw material mixture falls within the aforementioned preferred range. Each of their comprehensive evaluations is ⊚ (Excellent), and better evaluations than those in other Inventive Examples could be obtained. It should be noted that Inventive Example 33 was prepared by adding a burnt dolomite fine powder having a particle size of less than 75 µm to the raw material mixture to complexly incorporate magnesium oxide and calcium oxide.

With regard to transportability, pulsation slightly occurred in Inventive Example 48 in which the water content of the raw material mixture exceeds 1% by mass, but no pulsation occurred in Inventive Example 41 in which the water content of the raw material mixture is 1% by mass or less.

In Table 4, Comparative Example 31, which is an example where the content of (liquid) alkali silicate is excessively small, was evaluated as × (NG), in terms of abrasion resistance, corrosion resistance and bondability.

Comparative Example 32, which is an example where the content of (liquid) alkali silicate is excessively large, was evaluated as × (NG), in terms of corrosion resistance.

Comparative Example 33, which is an example where the basic compound fine powder (magnesium oxide fine powder) having a particle size of less than 75 µm is not contained, was evaluated as × (NG), in terms of abrasion resistance.

Comparative Example 34, which is an example where the content of the basic compound fine powder (magnesium oxide fine powder) having a particle size of less than 75 µm is excessively large, was evaluated as × (NG), in terms of bondability.

Comparative Example 35, which is an example where the content of the basic compound coarse powder (magnesium oxide coarse powder) having a particle size of 1 mm to less than 5 mm is excessively large, was evaluated as × (NG), in terms of bondability.

Comparative Example 36, which is an example where the content of the SiO₂ component derived from raw materials having a particle size of less than 75 µm is excessively small, was evaluated as × (NG), in terms of abrasion resistance.

Comparative Example 37, which is an example where the content of the SiO₂ component derived from raw materials having a particle size of less than 75 µm is excessively large, was evaluated as × (NG), in terms of corrosion resistance.

Comparative Example 38, which is an example where the content of the Al₂O₃ component derived from raw materials having a particle size of less than 75 µm is excessively small, was evaluated as × (NG), in terms of abrasion resistance.

Comparative Example 39, which is an example where the content of the Al₂O₃ component derived from raw materials having a particle size of less than 75 µm is excessively large, was evaluated as × (NG), in terms of corrosion resistance and bondability.

Comparative Example 40, which is an example where a firing temperature assuming a furnace wall temperature of a firing furnace is excessively high, was evaluated as × (NG), in terms of abrasion resistance.

Comparative Example 41, which is an example where the content of alumina cement is excessively large, was evaluated as × (NG), in terms of explosion resistance.

## Claims

1. A dry spraying material for a firing furnace having a furnace wall temperature of 1400°C or less, the dry spraying material being composed of a raw material mixture, the raw material mixture containing: one or more types selected from powdered alkali silicate and powdered alkali phosphate, in a total amount of 2% by mass to 15% by mass; and a basic compound fine powder of one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm, in a total amount of 0.1% by mass to 5% by mass, wherein:
an amount of a basic compound coarse powder contained in the raw material mixture is 10% by mass or less (including 0) in total, wherein the basic compound coarse powder is one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of 1 mm to less than 5 mm;
an amount of cement contained in the raw material mixture is 5% by mass or less (including 0); and
a remainder of the raw material mixture has a composition which is one of the following (1) to (3):
(1) the remainder mainly contains an alumina raw material, wherein in addition to the mainly-contained alumina raw material, the remainder includes at least one type selected from the group consisting of a silica raw material, an alumina-silica raw material, and a zircon raw material;
(2) the remainder mainly contains an alumina-silica raw material; and
(3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material,
whereby a SiO₂ component derived from raw materials having a particle size of less than 75 µm and an Al₂O₃ component derived from raw materials having a particle size of less than 75 µm are contained in the raw material mixture, respectively, in an amount of 1% by mass to 10% by mass and in an amount of 5% by mass to 40% by mass.

2. A dry spraying material for a firing furnace having a furnace wall temperature of 1400°C or less, the dry spraying material being composed of a raw material mixture and a liquid binder, wherein:
the liquid binder is one or more types selected from liquid alkali silicate and liquid alkali phosphate, wherein an addition amount of the liquid binder is 5% by mass to 40% by mass; and
the raw material mixture contains a basic compound fine powder of one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of less than 75 µm, in a total amount of 0.1% by mass to 5% by mass, wherein:
an amount of a basic compound coarse powder contained in the raw material mixture is 10% by mass or less (including 0) in total, wherein the basic compound coarse powder is one or more types selected from the group consisting of magnesium oxide, magnesium carbonate, magnesium sulfate, magnesium nitrate, calcium oxide (except for cement-derived calcium oxide), calcium carbonate, calcium sulfate, and calcium nitrate each having a particle size of 1 mm to less than 5 mm;
an amount of cement contained in the raw material mixture is 5% by mass or less (including 0); and
a remainder of the raw material mixture has a composition which is one of the following (1) to (3):
(1) the remainder mainly contains an alumina raw material, wherein in addition to the mainly-contained alumina raw material, the remainder includes at least one type selected from the group consisting of a silica raw material, an alumina-silica raw material, and a zircon raw material;
(2) the remainder mainly contains an alumina-silica raw material; and
(3) the remainder mainly contains a silicon carbide raw material, wherein in addition to the mainly-contained silicon carbide raw material, the remainder includes an alumina-silica raw material, or includes an alumina raw material and at least one of a silica raw material and a zircon raw material,
whereby a SiO₂ component derived from raw materials having a particle size of less than 75 µm and an Al₂O₃ component derived from raw materials having a particle size of less than 75 µm are contained in the dry spraying material, respectively, in an amount of 1% by mass to 10% by mass and in an amount of 5% by mass to 40% by mass.

3. The dry spraying material as claimed in claim 1 or 2, wherein the basic compound fine powder is magnesium oxide.

4. The dry spraying material as claimed in claim 1, wherein the raw material mixture contains the one or more types selected from powdered alkali silicate and powdered alkali phosphate, in a total amount of 3.5% by mass to 10% by mass.

5. The dry spraying material as claimed in claim 2, wherein the addition amount of the liquid binder is 8% by mass to 30% by mass.

6. The dry spraying material as claimed in any one of claims 1 to 5, wherein an amount of water contained in the raw material mixture is 1% by mass or less.
